# EUROPEAN PATENT SPECIFICATION

(11) **EP 0 558 201 B1**
(45) Date of publication and mention of the grant of the patent: **27.12.1996**
(21) Application number: 93300927.6
(22) Date of filing: 09.02.1993
(51) Int. Cl.: C02F 1/78

(54) **Treating liquids**
Behandlung von Flüssigkeiten
Traitement des fluides

(30) Priority: 22.02.1992 GB 9203827
(43) Date of publication of application: 01.09.1993
(73) Proprietor: The BOC Group plc, Windlesham Surrey GU20 6HJ (GB)
(72) Inventor: Garrett, Michael Ernest, Woking Surrey (GB); Coates, John Robert, Farnham, Surrey (GB)
(74) Representative: Gough, Peter

(56) References cited:
- DE-A- 2 949 702
- GB-A- 1 366 594

## Description

The present invention relates to a method of and apparatus for treating a liquid with ozone.

Ozone is an oxidising agent which finds use in the treatment of, for example, water to produce a potable product.

It is known to produce ozone directly from the oxygen present in air by means of a silent electric discharge or corona. The power efficiency of this known method of production is not good and the concentration of ozone which can be produced is in the region of between 3% and 4%.

It is known to increase the efficiency of this known method of production by using oxygen rather than air as the feeder gas for the ozoniser. It is known to produce an oxygen rich feed gas for an ozoniser using a pressure swing adsorption (PSA) technique.

Although oxygen is soluble in water, ozone has a greater solubility. It is therefore typical that the waste gas from the treatment of a liquid such as water with ozonised oxygen includes an enhanced mole ratio of oxygen to ozone.

Various systems have been proposed for recycling the oxygen rich waste gas from an apparatus (a contactor) in which ozone is contacted with water. A general summary of such systems is provided in Chapter VI entitled, "Ozone Generation and its Relationship to the Economical Application of Ozone in Waste Water Treatment" by Harvey M Rosen edited by Evans and published by Ann Arbor Science 1972. In one apparatus, air is compressed and oxygen is separated from the compressed air by pressure swing adsorption. The resulting oxygen gas is passed through an ozoniser and the resulting ozonised oxygen is contacted with water to be treated. The undissolved gas from the contactor is then recycled to the compression stage.

This known apparatus tends to be complex and impractical often because further apparatus is required to recompress the oxygen rich waste gas for use back into the PSA process. Although this oxygen rich waste gas is wet and the oxygen concentration reduced to about 75%, special blowers and compressors have to be used to reduce the danger of ignition.

Similar apparatus are provided in GB-A-1366594, DE-A-2949702 and EP-A-262449, each of which disclose an apparatus for treating a liquid with ozone. The apparatus comprises a pressure swing adsorption plant; an ozoniser; a contactor and means for placing the oxygen rich waste gas stream in fluid communication with the interior of a pressure vessel at sometime during the operation thereof.

It is an aim of the present invention to avoid the need for specialist apparatus and to utilise an existing PSA plant to remove moisture and contaminants and further introduce the oxygen rich waste gas into a PSA bed in such a way that this higher quality gas forms the initial part of a fresh charge of air into the PSA plant.

According to the present invention there is provided A method of treating a liquid with ozone comprising:
(a) separating oxygen from feed air by pressure swing adsorption in which at least two beds of adsorbent material are each subjected to a cycle including an adsorption step and a regeneration step, the cycles being arranged 180° out-of-phase thereby to produce a continuous flow of oxygen; during its regeneration step each bed being subjected to a vacuum;
(b) ozonising said oxygen;
(c) contacting the liquid to be treated with the ozonised oxygen thereby to form an ozonising liquid stream and a waste gas stream rich in oxygen; and
(d) returning the oxygen rich waste gas stream to each bed during its regeneration step and subsequent to its evacuation.

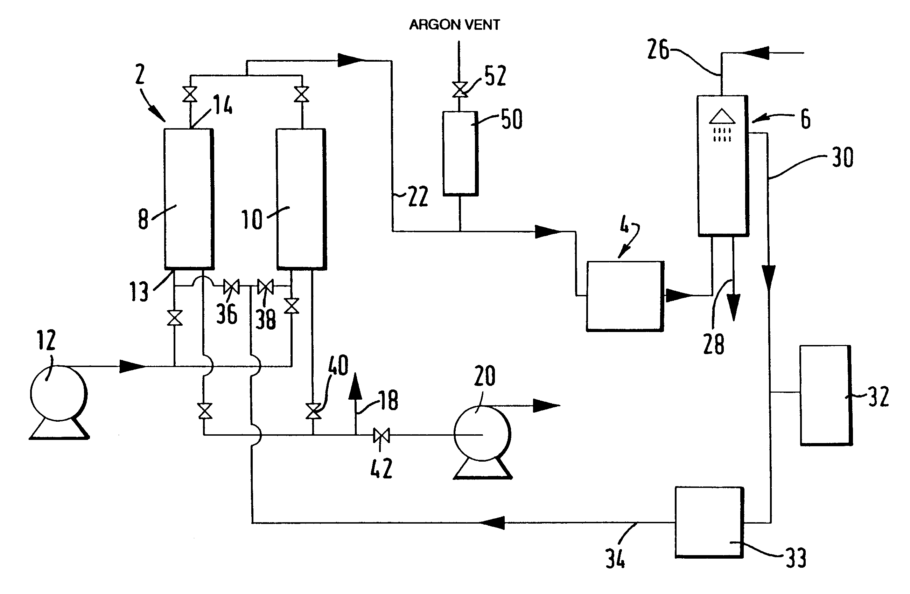

An embodiment of the invention will now be described, by way of example, reference being made to the Figure of the accompanying diagrammatic drawing which is a schematic flow diagram of an apparatus for treating a liquid with ozone.

As shown, the apparatus comprises an oxygen PSA plant 2 for the production of an oxygen rich product gas; an ozoniser 4 and a contactor 6.

The PSA plant 2 is a conventional two bed PSA plant comprising two pressure vessels 8, 10 each containing a bed of adsorbent material and a desiccant in the form of an alumina layer in a manner known per se. The adsorbent material preferentially adsorbs nitrogen and carbon dioxide relative to oxygen. As is known in the art each bed, in operation, passes through a cycle including an adsorption step and a regeneration step and the cycles of the pressure vessels 8, 10 are arranged 180° out-of-phase to provide a continuous dry product gas rich in oxygen which exits from the pressure swing adsorption plant 2.

When used in a conventional manner, a compressor 12 compresses feed air and supplies the feed air under pressure to a pressure vessel, for example, pressure vessel 8 undergoing its adsorption step. The feed air under pressure passes through inlet 13 and during the adsorption step the bed of adsorbent material selectively adsorbs nitrogen and carbon dioxide such that an oxygen rich product gas leaves the pressure vessel 8 via outlet 14.

As previously explained, whilst pressure vessel 8 is on its adsorption step the pressure vessel 10 is on its regeneration step during which it is depressurised initially by opening valve 40 and venting the interior of the vessel 10 to atmosphere via line 18 and subsequently reducing the interior pressure to below atmospheric by means of vacuum pump 20.

It will be apparent that by operating the two pressure vessels 8, 10 at 180° out-of-phase a continuous supply of an oxygen enriched product gas passes through line 22 to the ozoniser 4 in which ozone is formed by means of a silent electrical discharge.

The resulting ozonised oxygen which typically contains from 1 to 10% by volume of ozone then flows to the bottom (as shown) of a countercurrent contactor 6 in which ascending ozonised oxygen comes into intimate contact with a downward flow of liquid, e.g. water, to be treated.

This downward flow of water is created by taking as a side stream a portion of the total flow of water to be treated and introducing it into the top of the contactor 6 via line 26.

From the bottom (as shown) of the contactor 6 there will flow the water which has been ozonised via line 28 and also leaving the contactor 6 via line 30 is a waste gas which is however enriched in oxygen.

The waste gas leaving the contactor 6 via the line 30 typically contains from 70 to 85% by volume of oxygen and up to 1% by volume of ozone. This waste gas can be received initially in a buffer vessel 32 where is can be stored. A line 34 permits the oxygen rich waste gas either directly from the contactor 6 or the buffer vessel 32 to be placed in fluid communication with one or other of the pressure vessels 8, 10 via valves 36, 38. An ozone destructor 33 is located in the line 34 to remove any remaining ozone in the oxygen rich waste gas.

The oxygen rich waste gas is utilized in the PSA plant 2 as follows:-

When a pressure vessel, for example, pressure vessel 10 is on its regeneration step as previously explained the interior of the pressure vessel 10 will initially by means of valve 40 be open to atmosphere. Once substantially atmospheric pressure has been attained within the interior of the pressure vessel 10, then valve 42 will also be opened and vacuum pump 20 operated to reduce the pressure in the bed contained within the pressure vessel 10 by about 10%. When the pressure vessel 10 is about to enter its adsorption step, the waste gas rich in oxygen is drawn through the line 34 and through open valve 38 into the interior of the pressure vessel 10. After this the pressure vessels 8, 10 are equalised as is well known in the art.

Subsequently, a fresh charge of feed air from the compressor 12 is introduced into the pressure vessel 10 to commence the adsorption step.

The result of this is that the top part of the bed of adsorbent in the pressure vessel 10 is in contact with an already high concentration of oxygen from the waste gas, the next "layer" is comprised of the equalisation gas which will also be richer in oxygen than air and finally the lower part of the pressure vessel will be in contact with new incoming air.

The vacuum pump 20 will not have to be of any special construction since the vented gas will have an oxygen concentration lower than that of air and the action of the vacuum pump will be to improve the "clean up" of the bed and water adsorbing alumina layers.

By using the waste gas in the manner proposed above calculations would indicate that the size of the PSA plant 2 may be reduced by approximately 30% and also its power consumption to provide the same quantity and quality of feed gas to the ozoniser 4.

In a modification, a vessel 50 filled with a carbon sieve is placed in fluid communication with line 22. This is sometimes required since argon tends to stay in a constant ratio to oxygen and has a similar solubility and in view of the conversion of some of the oxygen to ozone which has a much higher solubility than oxygen, the result is a gradual argon gain.

Argon build-up is controlled by means of the vessel 50.

Oxygen rich product gas from the PSA plant 2 raises the pressure in the vessel 50 with the oxygen being adsorbed by the carbon sieve. When the highest pressure is reached the vessel 50 is vented via valve 52 to atmosphere which releases gas rich in argon sufficiently to restore the argon balance.

This operation can be timed to take place once for every cycle of the PSA plant.

However, other methods can be applied to the apparatus described to control argon build-up.

## Claims

1. A method of treating a liquid with ozone comprising:
(a) separating oxygen from feed air by pressure swing adsorption in which at least two beds of adsorbent material are each subjected to a cycle including an adsorption step and a regeneration step, the cycles being arranged 180° out-of-phase thereby to produce a continuous flow of oxygen; during its regeneration step each bed being subjected to a vacuum;
(b) ozonising said oxygen;
(c) contacting the liquid to be treated with the ozonised oxygen thereby to form an ozonising liquid stream and a waste gas stream rich in oxygen; and
(d) returning the oxygen rich waste gas stream to each bed during its regeneration step and subsequent to its evacuation.

2. A method as claimed in Claim 1, characterised in that the oxygen rich waste gas stream is returned to each bed during its regeneration step and before a pressure equalisation step during which the beds are in fluid communication.

## Patentansprüche

1. Ein Verfahren zur Behandlung einer Flüssigkeit mit Ozon mit den Schritten, daß
(a) Sauerstoff von Speiseluft durch Druck-Schwing-Adsorption getrennt wird, in welcher wenigstens zwei Adsorptionsmaterialbetten jeweils einem Zyklus ausgesetzt sind, der einen Adsorptionsschritt und einen Regenerationsschritt umfaßt, wobei die Zyklen um 180° außer Phase angeordnet sind, um dadurch einen kontinuierlichen Sauerstofffluß zu erzeugen, wobei während seines Regenerationsschrittes jedes Bett einem Vakuum ausgesetzt ist,
(b) der Sauerstoff ozonisiert wird,
(c) die zu behandelnde Flüssigkeit mit ozonisiertem Sauerstoff in Berührung gebracht wird, um dadurch einen ozonisierten Flüssigkeitsstrom und einen an Sauerstoff reichen Abgasstrom zu erzeugen, und
(d) der sauerstoffreiche Abgasstrom jedem Bett während seines Regenerationsschrittes und nachfolgend seiner Evakuierung zurückgeführt wird.

2. Ein Verfahren wie in Anspruch 1 beansprucht, in welchem der sauerstoffreiche Abgasstrom jedem Bett während seines Regenerationsschrittes und vor einem Druckausgleichsschritt zurückgeführt wird, während welchen sich die Betten in Fluidkommunikation befinden.

## Revendications

1. Procédé pour traiter un liquide par de l'ozone, ce procédé comprenant :
(a) la séparation de l'oxygène d'avec l'air d'alimentation par adsorption, avec variation cyclique ou alternée de la pression, opération au cours de laquelle au moins deux lits de matière adsorbante sont soumis chacun à un cycle comprenant une étape d'adsorption et une étape de régénération, les cycles étant déphasés de 180° de façon à produire un courant continu d'oxygène ; au cours de son étape de régénération, chaque lit étant soumis à un vide ;
(b) l'ozonisation dudit oxygène ;
(c) la mise en contact du liquide à traiter avec l'oxygène ozonisé, de façon à former un courant de liquide ozonisé et un courant de gaz résiduaire riche en oxygène ; et
(d) le renvoi du courant de gaz résiduaire riche en oxygène vers chaque lit au cours de son étape de régénération et après sa mise sous dépression.

2. Procédé tel que revendiqué à la revendication 1, dans lequel le courant de gaz résiduaire riche en oxygène est renvoyé vers chaque lit au cours de son étape de régénération et avant une étape d'égalisation de la pression, au cours de laquelle les lits sont en communication entre fluides.
